# EUROPEAN PATENT APPLICATION

(11) **EP 4 836 393 A1**
(43) Date of publication of application: **04.11.2026**
(21) Application number: 26174381.9
(22) Date of filing: 24.04.2026
(51) Int. Cl.: H04N 1/00, G03G 15/20, G03G 21/16

(54) **IMAGE FORMING APPARATUS**

(30) Priority: 28.04.2025 JP 2025074554
(71) Applicant: KYOCERA Document Solutions Inc., Osaka-shi, Osaka 540-8585 (JP)
(72) Inventor: Izumichi, Sachio, Osaka-shi, 540-8585 (JP); Kakuta, Masayuki, Osaka-shi, 540-8585 (JP); Ishida, Keiju, Osaka-shi, 540-8585 (JP); Shibuya, Takafumi, Osaka-shi, 540-8585 (JP)
(74) Representative: Plougmann Vingtoft a/s

(57) **Abstract**

An image forming apparatus includes a main body frame, and a fixing unit supported by the main body frame. In the image forming apparatus, the main body frame includes: two struts extending in a vertical direction and spaced apart from each other in a first direction orthogonal to the vertical direction; and two beams extending in a horizontal direction, spaced apart from each other in the first direction, and coupled to the two struts, respectively. The fixing unit includes a fixing support body with a bottom surface side placed on the two beams, in a state of being bridged over the two beams. A first beam on a first side of the first direction among the two beams includes an adjustment member attached to the first beam such that an attachment position in a same direction as an extending direction of the first beam is changeable. The fixing support body includes a height change portion configured to come into contact with a contact portion provided in the adjustment member and change a height of a first end portion on the first side of the fixing support body with respect to the first beam in accordance with the attachment position of the adjustment member.

## Description

### INCORPORATION BY REFERENCE

This application is based upon and claims the benefit of priority from the corresponding Japanese Patent Application No. 2025-074554 filed on April 28, 2025, the entire contents of which are incorporated herein by reference.

The present disclosure relates to an image forming apparatus including a fixing unit supported by a main body frame.

### BACKGROUND

An electrophotographic image forming apparatus transfers a toner image from an image carrier to a sheet, and fixes the toner image on the sheet with a fixing device.

The fixing device may be divided into a heating unit including a heater and a fixing unit including a fixing member and a pressure roller. The heater heats the fixing member.

In addition, it is known that the image forming apparatus includes a mechanism for moving the heating unit from a heating position to a retracted position in conjunction with an operation on an operation portion. When the heating unit is retracted to the retracted position, the fixing unit can be pulled out from the main body.

Incidentally, in a process in which a sheet is conveyed along a sheet conveying path to the fixing unit, there is a case where a deviation occurs in the angle at which the sheet enters a fixing position in the fixing unit. In other words, the sheet is in a tilted state before reaching the fixing position and is conveyed in the tilted state (fed at an angle). In this case, since the sheet does not enter straight relative to the fixing position, the image transferred to the sheet is skewed. This may be caused, for example, by an installation error in the sheet conveying direction or the roller width direction (longitudinal direction of the roller) of a pair of conveying rollers provided on the sheet conveying path, an error in the outer diameter size in the width direction of each roller of the pair of conveying rollers, or a difference in the amount of wear in the width direction of each roller. To prevent such image misalignment caused by sheet being fed at an angle, an adjustment mechanism is provided in the image forming apparatus to adjust the mounting position of the fixing unit with respect to the sheet conveying direction.

### SUMMARY

An image forming apparatus according to one aspect of the present disclosure includes a main body frame, and a fixing unit supported by the main body frame. In the image forming apparatus, the main body frame includes: two struts extending in a vertical direction and spaced apart from each other in a first direction orthogonal to the vertical direction; and two beams extending in a horizontal direction, spaced apart from each other in the first direction, and coupled to the two struts, respectively. The fixing unit includes a fixing support body with a bottom surface side placed on the two beams, in a state of being bridged over the two beams. A first beam on a first side of the first direction among the two beams includes an adjustment member attached to the first beam such that an attachment position in a same direction as an extending direction of the first beam is changeable. The fixing support body includes a height change portion configured to come into contact with a contact portion provided in the adjustment member and change a height of a first end portion on the first side of the fixing support body with respect to the first beam in accordance with the attachment position of the adjustment member.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a configuration diagram of an image forming apparatus according to an embodiment.
FIG. 2 shows a configuration of a main part of a fixing device in the image forming apparatus according to the embodiment.
FIG. 3 is a perspective view of a main body frame in the image forming apparatus according to the embodiment.
FIG. 4 is a front view of the fixing device and an interlocking mechanism in an urging state in the image forming apparatus according to the embodiment.
FIG. 5 is a front view of the fixing device and the interlocking mechanism in a retracting state in the image forming apparatus according to the embodiment.
FIG. 6 is a perspective view of a fixing unit in the image forming apparatus according to the embodiment.
FIG. 7 is a plan view of the fixing device and the interlocking mechanism in the urging state in the image forming apparatus according to the embodiment.
FIG. 8 is a plan view of the fixing device and the interlocking mechanism in the retracting state in the image forming apparatus according to the embodiment.
FIG. 9 is a perspective view of a peripheral portion of the fixing unit and a cover member in the image forming apparatus according to the embodiment.
FIG. 10 shows a cross section of a strut and a lateral contact portion of the fixing unit in the image forming apparatus according to the embodiment.
FIG. 11 shows a cross section of a beam and a lower contact portion of the fixing unit in the image forming apparatus according to the embodiment.
FIG. 12 shows the back of the fixing unit and a drive mechanism in the image forming apparatus according to the embodiment.
FIG. 13 is a perspective view of the front side of the fixing unit in the image forming apparatus according to the embodiment.
FIG. 14 is a perspective view showing a state where an exterior member is removed from the state shown in FIG. 13.
FIG. 15 is a front view showing the front side of the fixing unit in a state of being attached to the image forming apparatus according to the embodiment.
FIG. 16 is a partially enlarged view of a main part XVI in FIG. 15.
FIG. 17 is a partially enlarged view showing a height adjustment mechanism.
FIG. 18 is a perspective view showing a bottom surface support portion of a support body of the fixing unit in the image forming apparatus according to the embodiment.
FIG. 19 is a perspective view of the bottom surface support portion of the support body of the fixing unit in the image forming apparatus according to the embodiment as viewed from below.
FIG. 20A and FIG.20B show an adjustment member of the height adjustment mechanism, where FIG. 20A is a perspective view viewed from the front side, and FIG. 20B is a perspective view viewed from the rear side.
FIG. 21 is a perspective view showing a base of the adjustment member of the height adjustment mechanism.
FIG. 22A, FIG. 22B, and FIG. 22C are a diagram illustrating a method of adjusting the height of the fixing unit by the height adjustment mechanism.

### DETAILED DESCRIPTION

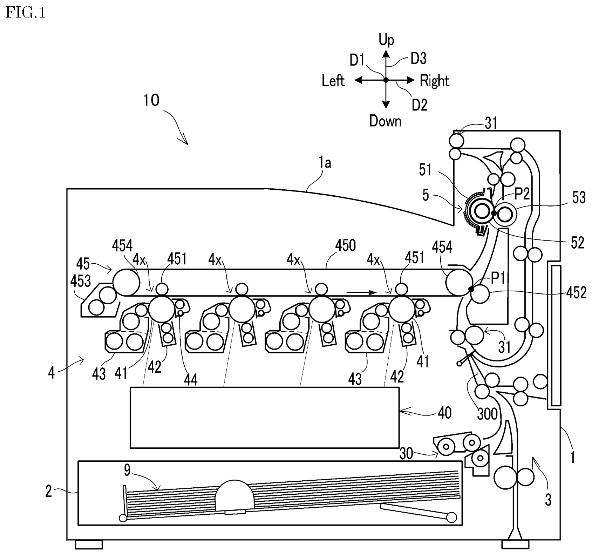

Hereinafter, an embodiment of the present disclosure will be described with reference to the drawings. It is noted that the following embodiment is an example of embodying the present disclosure and does not limit the technical scope of the present disclosure. In addition, in the following description, a vertical direction is defined as an up-down direction D3 in an installation state in which an image forming apparatus 10 can be used (the state shown in FIG. 1), a front-rear direction D1 is defined with the near side of the paper surface of FIG. 1 as the front (front side), and a left-right direction D2 is defined with the front of the image forming apparatus 10 in the installation state as the reference.

### [Configuration of Image Forming Apparatus 10]

The image forming apparatus 10 according to the embodiment executes print processing using an electrophotographic method. The print processing is processing for forming an image on a sheet 9.

As shown in FIG. 1, the image forming apparatus 10 includes a sheet storing portion 2, a sheet conveying device 3, and a printing device 4. The sheet conveying device 3 and the printing device 4 are housed in a main body portion 1 which is a housing.

The sheet storing portion 2 can store a plurality of sheets 9. The sheet conveying device 3 includes a sheet feeding device 30 and a plurality of conveying roller pairs 31.

The sheet feeding device 30 feeds the sheets 9 in the sheet storing portion 2 one by one to a conveying path 300. The conveying path 300 is a passage of the sheet 9.

The conveying roller pairs 31 convey the sheet 9 along the conveying path 300. One of the conveying roller pairs 31 discharges the sheet 9 on which an image has been formed from the conveying path 300 onto a discharge tray 1a.

The printing device 4 executes the print processing on the sheet 9 conveyed along the conveying path 300. The image formed on the sheet 9 is a toner image.

The printing device 4 includes a laser scanning unit 40, one or more image forming portions 4x, a transfer device 45, and a fixing device 5. The image forming portions 4x each include a photoconductor 41, a charging device 42, a developing device 43, and a drum cleaning device 44.

The charging device 42 charges the surface of the photoconductor 41. The laser scanning unit 40 scans the surface of the charged photoconductor 41 with a light beam. Thus, the laser scanning unit 40 forms an electrostatic latent image on the surface of the photoconductor 41.

The developing device 43 supplies toner to the surface of the photoconductor 41 to develop the electrostatic latent image into a toner image. The transfer device 45 transfers the toner image formed on the surface of the photoconductor 41 to the sheet 9.

The transfer device 45 transfers the toner image to the sheet 9 at a transfer position P1 on the conveying path 300.

In the present embodiment, the printing device 4 is a tandem type color printing device including the plurality of image forming portions 4x. In addition, the transfer device 45 includes an intermediate transfer belt 450, a plurality of primary transfer devices 451, a secondary transfer device 452, and a belt cleaning device 453.

In the example shown in FIG. 1, the printing device 4 includes four image forming portions 4x corresponding to four color toners of yellow, cyan, magenta, and black. The transfer device 45 includes four primary transfer devices 451 corresponding to the four image forming portions 4x.

The intermediate transfer belt 450 is rotatably supported by a plurality of support rollers 454. One of the support rollers 454 is rotated by being driven by a belt drive device (not shown). Thus, the intermediate transfer belt 450 rotates.

The primary transfer devices 451 transfer the toner images formed on the surfaces of the photoconductors 41 in the respective image forming portions 4x to the surface of the intermediate transfer belt 450. Thus, a composite toner image, in which the toner images of four colors are combined, is formed on the surface of the intermediate transfer belt 450.

The intermediate transfer belt 450 rotates while carrying the composite toner image. The secondary transfer device 452 transfers the composite toner image formed on the surface of the intermediate transfer belt 450 to the sheet 9 at the transfer position P1.

The drum cleaning device 44 removes primary waste toner from the surface of the photoconductor 41. The primary waste toner is toner remaining on a portion of the surface of the photoconductor 41 that has passed through the primary transfer device 451.

The belt cleaning device 453 removes secondary waste toner from the surface of the intermediate transfer belt 450. The secondary waste toner is toner remaining on a portion of the surface of the intermediate transfer belt 450 that has passed through the secondary transfer device 452.

The fixing device 5 heats and presses the composite toner image on the sheet 9 at a fixing position P2 on the conveying path 300. Thus, the fixing device 5 fixes the composite toner image on the sheet 9. The fixing position P2 is a position downstream of the transfer position P1 in the sheet conveying direction.

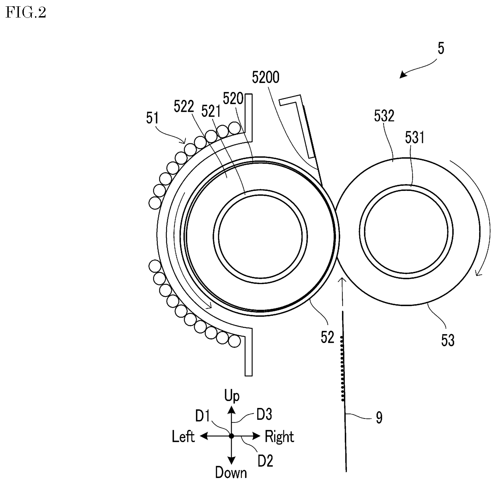

As shown in FIG. 2, the fixing device 5 includes a heater 51, a fixing belt 52, a fixing roller 520, a pressure roller 53, and a sheet separating member 5200.

The fixing belt 52 is a flexible cylindrical member that encloses the fixing roller 520. The fixing belt 52 is heated by the heater 51.

The fixing roller 520 is a cylindrical member that supports the fixing belt 52 inside the fixing belt 52. The fixing roller 520 includes a cylindrical core metal portion 521 and an elastic portion 522 formed on the outer periphery of the core metal portion 521.

The fixing roller 520 is rotatably supported. The fixing belt 52 can rotate together with the fixing roller 520.

The fixing belt 52 includes a conductive base material, an elastic layer formed on the outer periphery of the base material, and a release layer formed on the outer periphery of the elastic layer.

The heater 51 is disposed to face the outer peripheral surface of the fixing belt 52. In the present embodiment, the heater 51 is an electromagnetic induction heating device. The heater 51 mainly heats the base material of the fixing belt 52 by electromagnetic induction.

The pressure roller 53 is rotatably supported. The pressure roller 53 includes a cylindrical core metal portion 531 and an elastic portion 532 formed on the outer periphery of the core metal portion 531.

The pressure roller 53 is rotated by being driven by a drive device (not shown). The fixing belt 52 and the fixing roller 520 rotate in conjunction with the pressure roller 53.

The fixing belt 52 heats the toner image formed on the sheet 9. The pressure roller 53 presses the toner image toward the sheet 9.

It is noted that the fixing belt 52 is an example of the fixing member heated by the heater 51. The pressure roller 53 is an example of the pressure member that urges the sheet 9 to the fixing belt 52.

When the sheet 9 adheres to the fixing belt 52, the sheet separating member 5200 peels the sheet 9 from the fixing belt 52.

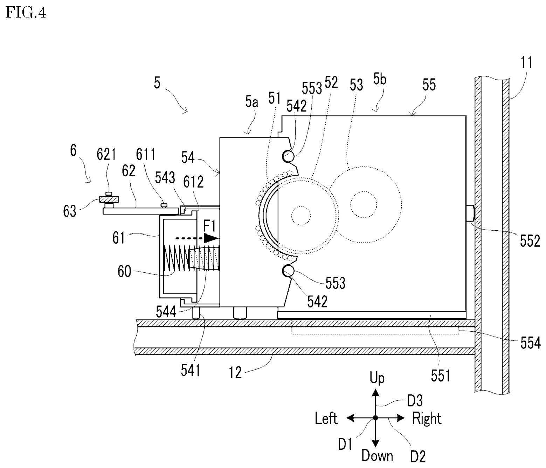

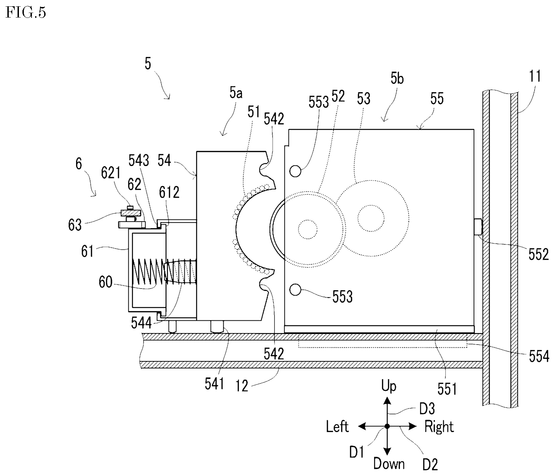

As shown in FIG. 4 and FIG. 5, in the present embodiment, the fixing device 5 is divided into a heating unit 5a and a fixing unit 5b. The heating unit 5a includes the heater 51 and a heating support body 54. The fixing unit 5b includes the fixing belt 52, the fixing roller 520, the pressure roller 53, and a fixing support body 55.

The heating support body 54 is a member that supports the heater 51. The fixing support body 55 is a member that supports the fixing belt 52, the fixing roller 520, and the pressure roller 53. The fixing belt 52 is supported by the fixing support body 55 via the fixing roller 520.

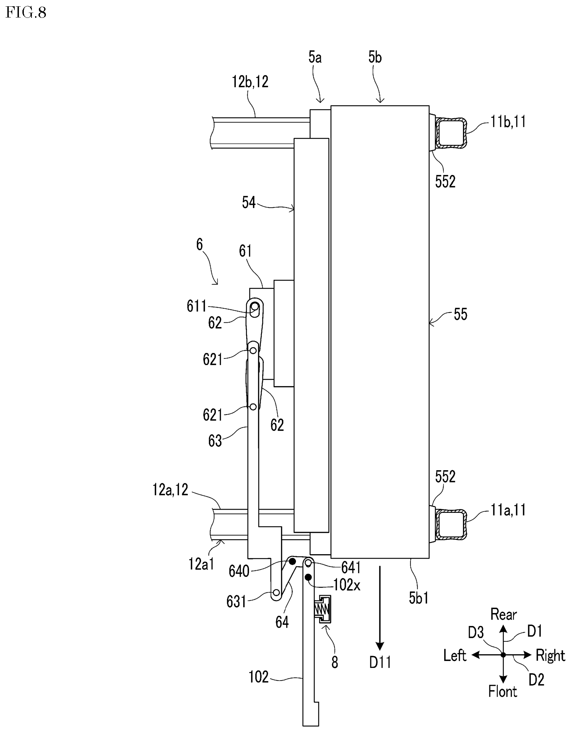

The fixing unit 5b can be pulled out from the main body portion 1 by moving the heating unit 5a away from the fixing unit 5b (see FIG. 5 and FIG. 8).

By the way, it is important to dispose the heater 51 at an appropriate position with respect to the fixing belt 52 in order to increase the heating efficiency of the fixing belt 52 by the heater 51. When an electromagnetic induction heating device is employed as the heater 51, the accuracy of the position of the heater 51 is particularly important.

On the other hand, it is preferable that a unit positioning mechanism for disposing the heating unit 5a and the fixing unit 5b at desired positions is as simple as possible.

The unit positioning mechanism includes a mechanism for positioning the heating unit 5a at a reference position close to the fixing unit 5b and a mechanism for moving the heating unit 5a to a retracted position away from the fixing unit 5b.

The image forming apparatus 10 uses a simple mechanism to realize the mechanism for disposing the heating unit 5a and the fixing unit 5b at desired positions.

### [Unit Positioning Mechanism]

Hereinafter, the unit positioning mechanism for positioning the heating unit 5a and the fixing unit 5b will be described.

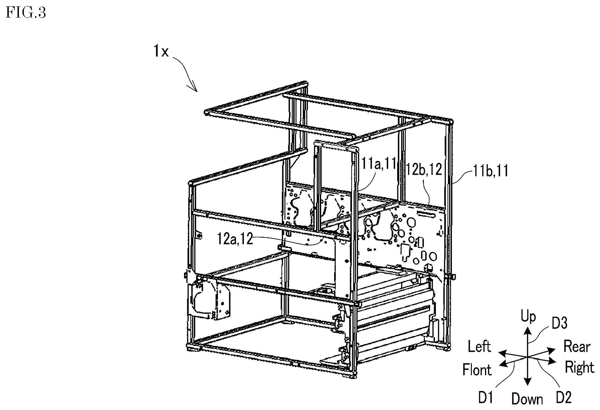

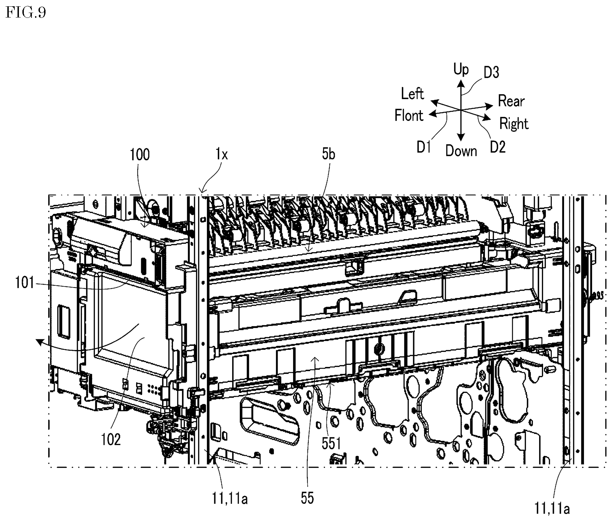

The main body portion 1 of the image forming apparatus 10 includes a main body frame 1x and an exterior member 100 covering the main body frame 1x (see FIG. 3 and FIG. 9).

The main body frame 1x is composed of a combination of a plurality of metal pipes (pipe frames) (see FIG. 3). The heating unit 5a and the fixing unit 5b are supported by the main body frame 1x. The fixing unit 5b is disposed next to the heating unit 5a.

The exterior member 100 is attached to the main body frame 1x (see FIG. 9). The exterior member 100 forms the exterior of the image forming apparatus 10. Specifically, the exterior member 100 is a member that is exposed when a front panel (not shown) provided on the front of the image forming apparatus 10 is opened, and is an exterior panel that covers at least the front portion of the fixing device 5.

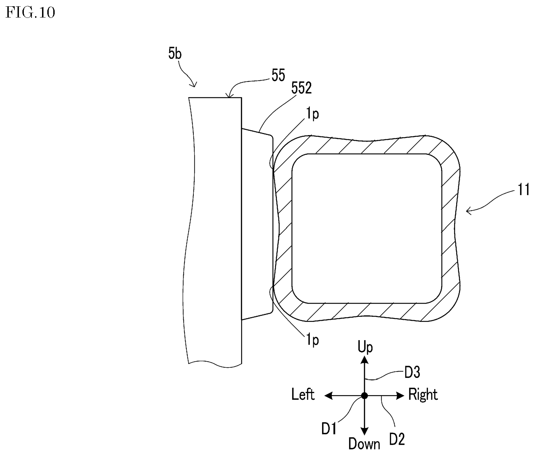

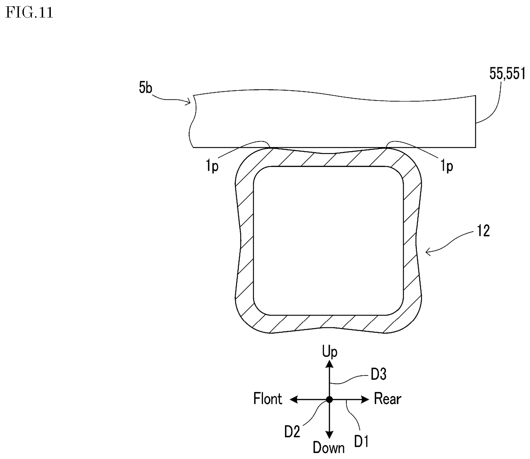

The metal pipes constituting the main body frame 1x include two struts 11 and two beams 12 (see FIG. 3). That is, the two struts 11 and the two beams 12 are formed of metal pipes. In the present embodiment, metal pipes having a substantially quadrangular prism shape are used as the two struts 11 and the two beams 12 (see FIG. 10 and FIG. 11).

The two struts 11 extend in the up-down direction D3, and spaced apart from each other in the front-rear direction D1 (see FIG. 3). It is noted that the up-down direction D3 is a vertical direction of the image forming apparatus 10.

The two struts 11 extend in the up-down direction D3 beside the fixing unit 5b (see FIG. 4 and FIG. 9). In the present embodiment, as an example, the two struts 11 are provided on the right side of the fixing unit 5b.

The front-rear direction D1 is also a direction along the rotational center lines of the fixing belt 52 and the pressure roller 53. In the present embodiment, the front-rear direction D1 is the depth direction of the image forming apparatus 10 and is an example of the first direction according to the present disclosure.

The exterior member 100 has an opening portion 101 and a cover member 102 (see FIG. 9). The opening portion 101 is a portion where an opening is formed to expose a front end portion 5b1 on the front side (an example of the first side) of the fixing unit 5b to the front outer side.

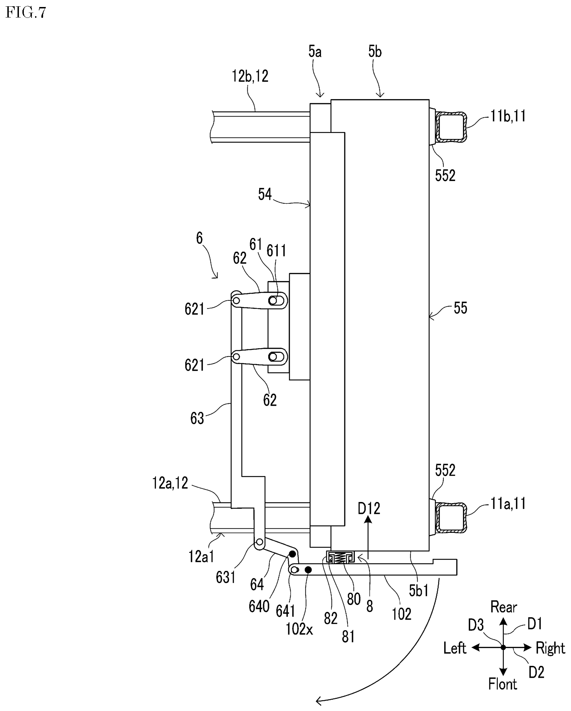

The cover member 102 is supported by a first support shaft 102x extending in the up-down direction D3 (see FIG. 7). The first support shaft 102x is provided on the left side of the opening portion 101 in the exterior member 100. Thus, the cover member 102 is rotatable around the first support shaft 102x. The cover member 102 is rotatable between a closed position to close the opening portion 101 and an open position to open the opening portion 101.

FIG. 4 and FIG. 7 show the fixing device 5 when the cover member 102 is in the closed position. FIG. 5 and FIG. 8 show the fixing device 5 when the cover member 102 is in the open position.

When the cover member 102 is in the closed position, the cover member 102 is held in the closed position by a lock mechanism (not shown). When the lock by the lock mechanism is released, the cover member 102 can be rotated from the closed position to the open position.

The two struts 11 include a first strut 11a disposed on the front side of the image forming apparatus 10 and a second strut 11b disposed on the back side of the image forming apparatus 10 (see FIG. 3).

The two beams 12 extend in the left-right direction D2 below the heating unit 5a and the fixing unit 5b, and are spaced apart from each other in the front-rear direction D1 (see FIG. 3 and FIG. 4). The left-right direction D2 is the width direction of the image forming apparatus 10.

The two beams 12 are respectively coupled to the two struts 11 (see FIG. 3). For example, the two beams 12 are respectively coupled to the two struts 11 by welding.

The two beams 12 include a first beam 12a disposed on the front side of the image forming apparatus 10 and a second beam 12b disposed on the back side of the image forming apparatus 10 (see FIG. 3). The first beam 12a is coupled to the first strut 11a, and the second beam 12b is coupled to the second strut 11b.

The fixing unit 5b is disposed between the heating unit 5a and the two struts 11 (see FIG. 3).

The heating support body 54 of the heating unit 5a is placed on the two beams 12 in a state of being bridged over the two beams 12. Similarly, the fixing support body 55 of the fixing unit 5b is placed on the two beams 12 in a state of being bridged over the two beams 12.

That is, neither the heating unit 5a nor the fixing unit 5b is fixed to the main body frame 1x by a fixing tool such as a screw.

The heating unit 5a and the fixing unit 5b are placed on the two beams 12 with their longitudinal directions aligned with the front-rear direction D1 (see FIG. 7 and FIG. 8).

The heating unit 5a and the fixing unit 5b are disposed side by side in the left-right direction D2. That is, the left-right direction D2 is a direction in which the heating unit 5a and the fixing unit 5b are arranged. The left-right direction D2 is a direction that intersects the front-rear direction D1.

The image forming apparatus 10 further includes a first spring 60 and an interlocking mechanism 6 (see FIG. 4, FIG. 5, FIG. 7, and FIG. 8). For example, the first spring 60 is supported by a projection 544 that the heating support body 54 has.

The first spring 60 is an elastic member having elasticity and urges the heating support body 54 toward the fixing support body 55 with elastic force (see FIG. 4). The first spring 60 is an example of the heating unit urging member.

The urging force F1 of the first spring 60 to the heating support body 54 (see FIG. 4) is greater than the static friction force of the heating unit 5a and the fixing unit 5b against the two beams 12.

The heating support body 54 has a plurality of ribs 541 in contact with the upper surfaces of the two beams 12. The fixing support body 55 has a bottom surface support portion 551 in contact with the upper surfaces of the two beams 12. The bottom surface support portion 551 is attached to a lower portion of the fixing support body 55. The ribs 541 of the heating support body 54 are provided to reduce the static friction force. It is noted that ribs similar to the ribs 541 may be provided on the bottom surface of the bottom surface support portion 551.

The first spring 60 urges the heating support body 54 to bring the heating support body 54 into contact with the fixing support body 55. Further, the first spring 60 urges the heating support body 54 to bring the fixing support body 55 into contact with the two struts 11. That is, the first spring 60 urges the fixing support body 55 toward the struts 11 via the heating support body 54.

The heating support body 54 has a plurality of concave portions 542 in a concave shape that are open laterally (see FIG .4 and FIG. 5). The heating support body 54 has four concave portions 542 spaced apart in the front-rear direction D1 and the up-down direction D3.

As shown in FIG. 4 and FIG. 5, the fixing support body 55 has a plurality of protruding portions 553 in a convex shape that can enter the plurality of concave portions 542 respectively. The fixing support body 55 has four protruding portions 553 corresponding to the four concave portions 542. The upper concave portions 542 can fit to the protruding portions 553. The position of the heating support body 54 in the left-right direction D2 and its position in the up-down direction D3 with respect to the position of the fixing support body 55 are regulated by fitting the upper concave portions 542 to the protruding portions 553. The lower concave portions 542 are designed to allow the protruding portions 553 to loosely fit, and there is clearance (a gap) in the up-down direction D3 in a state where the protruding portions 553 fit into the concave portions 542. In the left-right direction D2, the position is regulated in a state where the bottoms of the concave portions 542 are in contact with the protruding portions 553.

The first spring 60 urges the heating support body 54 to bring the inner surfaces of the concave-shaped portions of the four concave portions 542 into contact with the four protruding portions 553 (see FIG. 4).

In addition, by the protruding portions 553 fitting into the concave portions 542, the relative movement of the heating support body 54 and the fixing support body 55 in the up-down direction D3 is restricted. Specifically, the movement of the fixing support body 55 in the up-down direction D3 with respect to the heating support body 54 is restricted. It is noted that the fixing support body 55 is movable in the up-down direction D3 with respect to the heating support body 54 within the range of the clearance in the up-down direction D3.

It is noted that the fixing support body 55 may have the concave portions 542 and the heating support body 54 may have the protruding portions 553.

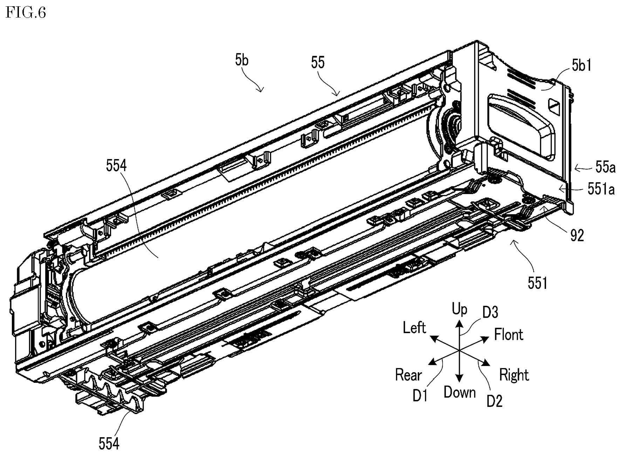

In addition, the fixing support body 55 has a plurality of strut contact portions 552 protruding toward the two struts 11 (see FIG. 4 and FIG. 6). The strut contact portions 552 come into contact with side surfaces of the two struts 11.

The interlocking mechanism 6 moves the heating unit 5a along the left-right direction D2 in conjunction with the movement of the cover member 102.

When the cover member 102 is moved from the closed position to the open position, the interlocking mechanism 6 moves the heating support body 54 of the heating unit 5a from a reference position to a retracted position (see FIG. 4 and FIG. 5).

The reference position is the position of the heating support body 54 when the heating support body 54 is in contact with the fixing support body 55. The retracted position is the position of the heating support body 54 when the heating support body 54 is separated from the fixing support body 55.

When the heating support body 54 is moved from the reference position to the retracted position, the four protruding portions 553 are separated from the four concave portions 542 (see FIG. 5).

It is noted that the heating support body 54 being at the reference position is synonymous with the heating unit 5a being at the reference position. In addition, the heating support body 54 being at the retracted position is synonymous with the heating unit 5a being at the retracted position.

The main body frame 1x supports the fixing unit 5b at a predetermined mounting position set on the body frame 1x. In addition, the main body frame 1x supports the fixing unit 5b located at the mounting position so that the fixing unit 5b can be pulled forward from the main body frame 1x when the heating support body 54 is at the retracted position. That is, when the heating support body 54 is at the retracted position, the operator can pull out the fixing unit 5b from the main body frame 1x in a removing direction D11 along the front-rear direction D1 (see FIG. 8).

When the fixing unit 5b is pulled out from the main body frame 1x, the fixing unit 5b can pass through the opening portion 101 of the exterior member 100.

Meanwhile, when the cover member 102 is moved from the open position to the closed position, the interlocking mechanism 6 moves the heating support body 54 from the retracted position to the reference position (see FIG. 7 and FIG. 8).

When the heating support body 54 is moved from the retracted position to the reference position, the four protruding portions 553 fit into the four concave portions 542 (see FIG. 4).

The cover member 102 also serves as an operation portion that can be moved between a first position and a second position by being operated. The closed position of the cover member 102 is the first position of the operation portion. The open position of the cover member 102 is the second position of the operation portion.

For example, the interlocking mechanism 6 includes an action member 61, two first link members 62, a second link member 63, and a third link member 64 (see FIG. 7 and FIG. 8).

The action member 61 is disposed to be movable along the left-right direction D2. The two first link members 62 are coupled to the action member 61 by two first coupling shafts 611. The second link member 63 is coupled to the two first link members 62 by two second coupling shafts 621.

The third link member 64 is supported by a second support shaft 640. The third link member 64 is rotatable around the second support shaft 640. The third link member 64 is coupled to the second link member 63 by a third coupling shaft 631. The cover member 102 is coupled to the third link member 64 by a fourth coupling shaft 641.

The interlocking mechanism 6 shown in FIG. 7 and FIG. 8 is a link mechanism that converts the rotating motion of the cover member 102 into the moving motion of the action member 61 along the left-right direction D2.

When the cover member 102 rotates, the second link member 63 is moved along the front-rear direction D1 by the action of the third link member 64.

When the second link member 63 moves along the front-rear direction D1, the action member 61 is moved along the left-right direction D2 by the action of the first link member 62.

When the cover member 102 moves from the closed position to the open position, the interlocking mechanism 6 moves the action member 61 away from the fixing unit 5b (leftward in the present embodiment). When the cover member 102 moves from the open position to the closed position, the interlocking mechanism 6 moves the action member 61 toward the fixing unit 5b (rightward in the present embodiment).

The first spring 60 is disposed between the action member 61 and the heating support body 54 of the heating unit 5a (see FIG. 4 and FIG. 5). When approaching the heating support body 54 along the left-right direction D2, the action member 61 pushes the first spring 60 toward the heating support body 54 (see FIG. 4).

When the action member 61 pushes the first spring 60 toward the heating support body 54, the first spring 60 urges the heating support body 54 toward the reference position.

The action member 61 has an engaging portion 612 that can engage with an engaged portion 543 of the heating support body 54 (see FIG. 4). When the action member 61 moves away from the heating support body 54 along the left-right direction D2, the engaging portion 612 engages with the engaged portion 543.

When the action member 61 moves away from the heating support body 54 along the left-right direction D2, the heating support body 54 receives force from the action member 61 through the engaging portion 612 and moves from the reference position to the retracted position (see FIG. 5).

In contrast, when the action member 61 moves toward the heating support body 54 along the left-right direction D2, the heating support body 54 receives force from the action member 61 through the first spring 60 and moves from the retracted position to the reference position (see FIG. 4).

The heating unit 5a and the fixing unit 5b are positioned in the left-right direction D2 by being sandwiched between the first spring 60 and the two struts 11.

It is noted that the interlocking mechanism 6 may include a gear mechanism such as a rack-and-pinion mechanism. Also in this case, the interlocking mechanism 6 converts the rotating motion of the cover member 102 into the moving motion of the action member 61 along the left-right direction D2.

In addition, the heating unit 5a and the fixing unit 5b are positioned in the up-down direction D3 by being supported to be placed on the two beams 12 in a state where the heating unit 5a and the fixing unit 5b are positioned relative to each other. The load of the heating unit 5a and the fixing unit 5b restricts the upward movement of the heating unit 5a and the fixing unit 5b.

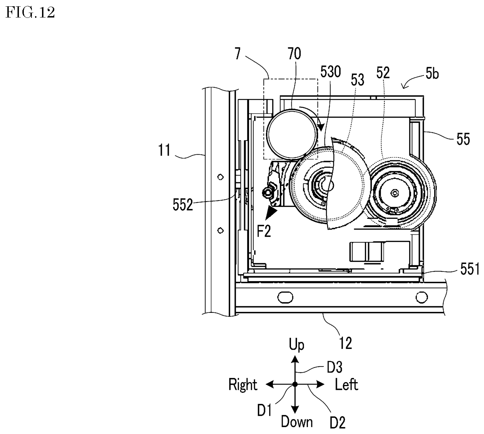

As shown in FIG. 12, the image forming apparatus 10 includes a drive mechanism 7 having a driving gear 70. The drive mechanism 7 includes a motor (not shown). The drive mechanism 7 transmits rotational force to the fixing unit 5b through the driving gear 70.

The fixing unit 5b includes a driven gear 530 that meshes with the driving gear 70. The driven gear 530 transmits the rotational force received from the driving gear 70 to the fixing roller 520. Thus, the fixing belt 52 rotates. That is, the driven gear 530 transmits the rotational force to the fixing belt 52 via the fixing roller 520.

The pressure roller 53 rotates in conjunction with the rotating fixing belt 52. It is noted that the driven gear 530 is also a gear that transmits the rotational force to the pressure roller 53 via the fixing roller 520 and the fixing belt 52.

The direction of pressure F2 that the teeth of the driven gear 530 receive from the teeth of the driving gear 70 is diagonally downward toward the two struts 11. Therefore, the pressure F2 that the teeth of the driven gear 530 receive from the teeth of the driving gear 70 acts as force that urges the fixing unit 5b toward the two struts 11 and the two beams 12.

The fixing unit 5b is more firmly positioned in the left-right direction D2 and the up-down direction D3 by the pressure F2 received from the driving gear 70. In addition, the heating unit 5a is also firmly positioned in the up-down direction D3 together with the fixing unit 5b by the action of the concave portions 542 and the protruding portions 553.

In the present embodiment, the drive mechanism 7 also serves as a downward urging mechanism that urges the fixing unit 5b downward.

In addition, the image forming apparatus 10 further includes a cover urging mechanism 8 attached to the inner surface of the cover member 102 (see FIG. 7 and FIG. 8). In addition, the fixing support body 55 of the fixing unit 5b has a beam contact portion 554 protruding downward from the lower surface (see FIG. 4, FIG. 5, FIG. 6, and FIG. 9).

The cover urging mechanism 8 includes a second spring 80, which is an elastic member, a spring case 81, and a cap 82 (see FIG. 7).

The spring case 81 houses the second spring 80. The cap 82 is movably attached to the spring case 81. The second spring 80 is an example of the fixing unit urging member.

The second spring 80 is sandwiched between the cover member 102 and the fixing support body 55 of the fixing unit 5b when the cover member 102 is in the closed position. In the present embodiment, the second spring 80 and the cap 82 are sandwiched between the cover member 102 and the fixing support body 55.

When the second spring 80 is sandwiched between the cover member 102 and the fixing support body 55, the second spring 80 urges the fixing support body 55 in a mounting direction D12 with elastic force (see FIG. 7). The mounting direction D12 is the opposite direction of the removing direction D11.

In addition, the force received by the fixing support body 55 from the second spring 80 when the cover member 102 is in the closed position brings the beam contact portion 554 into contact with a side surface of one of the two beams 12. In the present embodiment, the beam contact portion 554 comes into contact with a front side surface of the second beam 12b.

The fixing unit 5b is positioned in the front-rear direction D1 by the action of the second spring 80 and the beam contact portion 554.

It is noted that the cover urging mechanism 8 may be attached to the fixing support body 55 of the fixing unit 5b.

In addition, each of the struts 11 has side surfaces on four sides. The four side surfaces of each of the struts 11 each have two raised portions 1p forming ridge lines along the longitudinal direction of the strut 11 (see FIG. 10).

The strut contact portions 552 of the fixing support body 55 are each brought into contact with the two raised portions 1p of the corresponding one of the two struts 11. Thus, the fixing unit 5b is stably positioned in the left-right direction D2.

Each of the beams 12 also has side surfaces on four sides. The four side surfaces of each of the beam 12 each have two raised portions 1p forming ridge lines along the longitudinal direction of the beam 12 (see FIG. 11).

The bottom surface support portion 551 of the fixing support body 55 is brought into contact with the two raised portions 1p of the corresponding one of the two beams 12. Thus, the fixing unit 5b is stably positioned in the up-down direction D3.

By employing the image forming apparatus 10, the unit positioning mechanism for disposing the heating unit 5a and the fixing unit 5b at desired positions can be realized by a simple mechanism.

### [Height Adjustment Mechanism 90]

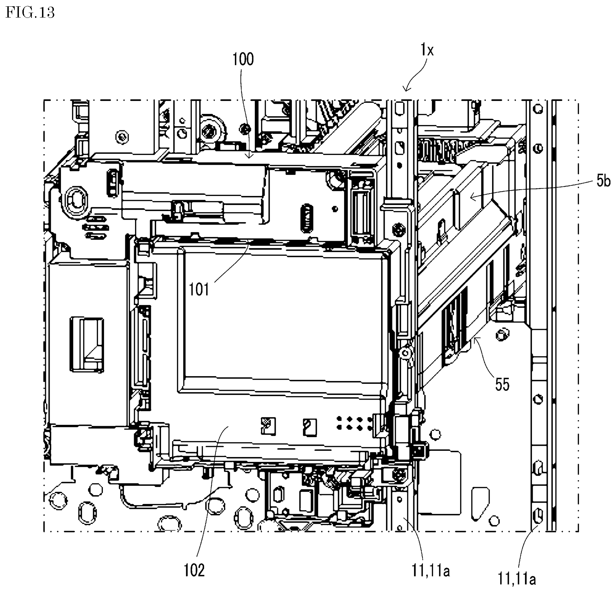

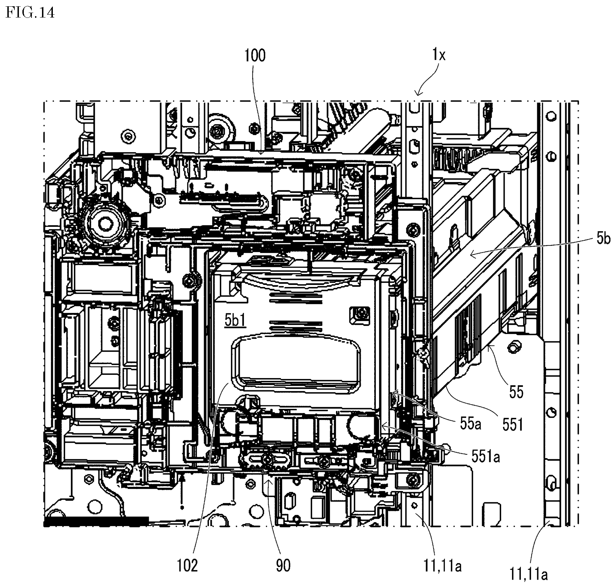

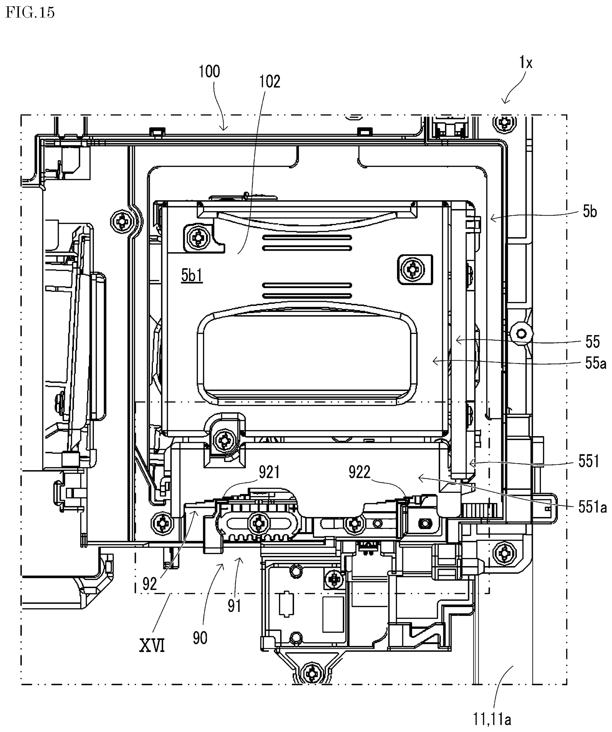

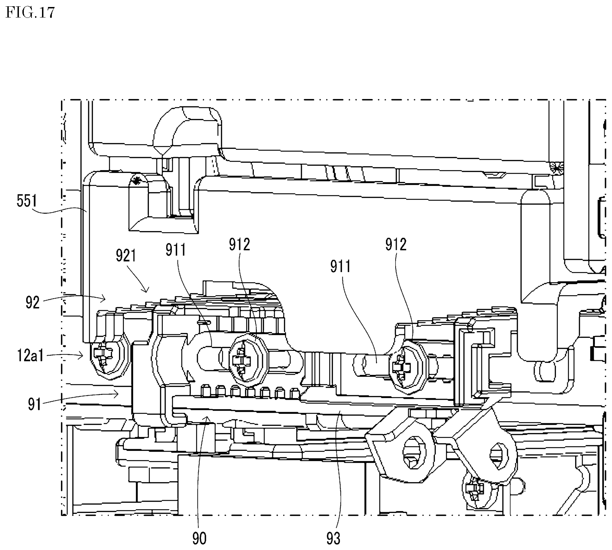

As shown in FIG. 14, the image forming apparatus 10 includes a height adjustment mechanism 90. The height adjustment mechanism 90 will be described below with reference to FIG. 13 to FIG. 22C. Here, FIG. 13 and FIG. 14 are perspective views showing a state where the front panel (not shown) provided at the front of the image forming apparatus 10 is opened. FIG. 14 shows a state where the exterior member 100 is removed from the main body frame 1x. FIG. 15 is a front view of the fixing unit 5b in the state where the exterior member 100 is removed.

In the image forming apparatus 10, in the process in which the sheet is conveyed along the conveying path 300 from the sheet feeding device 30 to the fixing position P2 of the fixing unit 5b, a deviation may occur in the angle at which the sheet enters the fixing position P2. That is, the sheet is in a tilted state before reaching the fixing position P2, and is conveyed in the tilted state (fed at an angle). In this case, since the sheet does not enter straight relative to the fixing position P2, the image transferred to the sheet is skewed. This may be caused, for example, by an installation error in the sheet conveying direction or roller width direction (longitudinal direction of the roller) of the plurality of conveying roller pairs 31 provided on the sheet conveying path 300, an error in the outer diameter size in the width direction of each roller of the conveying roller pairs 31, or a difference in the amount of wear in the width direction of each roller. To prevent such image misalignment caused by the sheet being fed at an angle, the height adjustment mechanism 90 capable of adjusting the mounting position of the fixing unit 5b with respect to the sheet conveying direction (height direction in the present embodiment) is provided in the image forming apparatus 10.

The height adjustment mechanism 90 is an adjustment mechanism for adjusting the mounting position of the fixing unit 5b in the up-down direction D3 with respect to the sheet conveying direction. In the present embodiment, the height adjustment mechanism 90 adjusts the height position of the front end portion 5b1 on the front side of the fixing unit 5b.

As shown in FIG. 14 and FIG. 15, in a state where the fixing unit 5b is mounted on the main body frame 1x, the height adjustment mechanism 90 is disposed in the vicinity of a lower portion of the front end portion 5b1 of the fixing unit 5b.

As shown in FIG. 13, in the present embodiment, in a state where the exterior member 100 is attached to the main body frame 1x, a part of the height adjustment mechanism 90, specifically, all or a part of an adjustment member 91 to be described later is covered and hidden by the cover member 102 of the exterior member 100. Accordingly, the operator who performs the height adjustment cannot access the adjustment member 91 of the height adjustment mechanism 90 due to the presence of the cover member 102 in a state where the front panel is merely opened, and cannot adjust the height position of the fixing unit 5b. On the other hand, by opening the front panel and further opening the cover member 102 of the exterior member 100 from the closed position to the open position, the operator can access the adjustment member 91 of the height adjustment mechanism 90 to adjust the height position of the front end portion 5b1 of the fixing unit 5b.

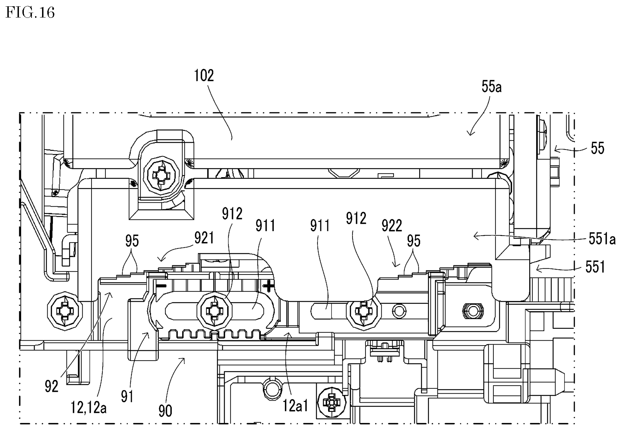

FIG. 16 is a partially enlarged view showing the height adjustment mechanism 90. As shown in FIG. 16, the height adjustment mechanism 90 includes the adjustment member 91 and a height change portion 92.

The adjustment member 91 is attached to the first beam 12a on the front side. In other words, the first beam 12a has the adjustment member 91. The adjustment member 91 is attached to a front-side side surface 12a1 (first side surface) of the first beam 12a. In the present embodiment, the adjustment member 91 is attached to the first beam 12a in such a manner that the attachment position in the same direction as the extending direction of the first beam 12a (that is, in the left-right direction D2) can be changed.

As shown in FIG. 16, the adjustment member 91 is attached to the front-side side surface (an example of the first side surface) of the first beam 12a. Therefore, when adjusting the height of the fixing unit 5b, the operator can easily access the adjustment member 91.

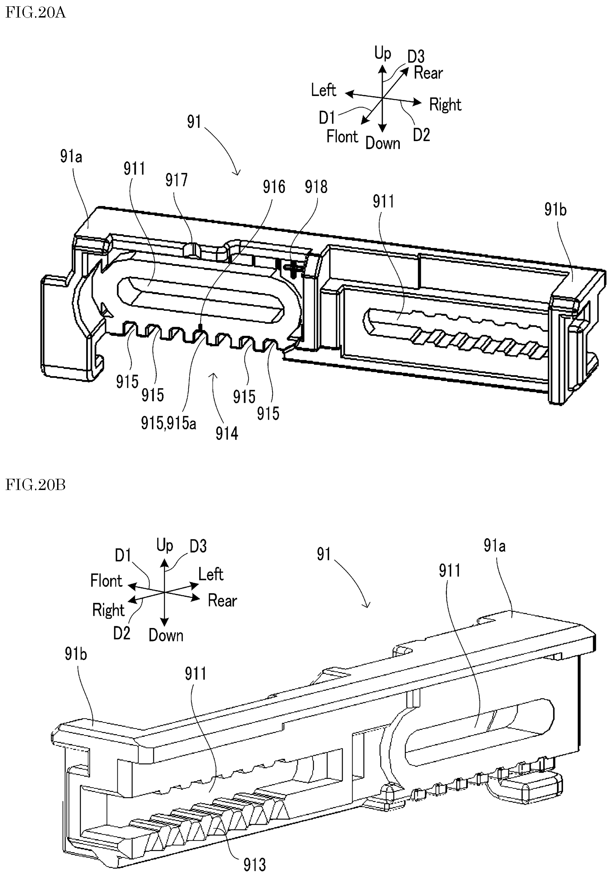

The height change portion 92 is provided in the fixing support body 55 of the fixing unit 5b. Specifically, the height change portion 92 is provided in the bottom surface support portion 551 of the fixing support body 55. In other words, the fixing support body 55 has the height change portion 92. In the present embodiment, the height change portion 92 is formed integrally with the bottom surface support portion 551. The height change portion 92 changes the height position of a front-side end portion 55a (an example of the first end portion of the present disclosure) of the fixing support body 55 with respect to the first beam 12a in accordance with the attachment position of the adjustment member 91. In the present embodiment, when the fixing unit 5b is mounted on the main body frame 1x, the height change portion 92 comes into contact with contact portions 91a and 91b (see FIG. 20A and FIG.20B) provided in the adjustment member 91, whereby the height position of the end portion 55a of the fixing support body 55 is changed to a position corresponding to the attachment position of the adjustment member 91 by the height change portion 92.

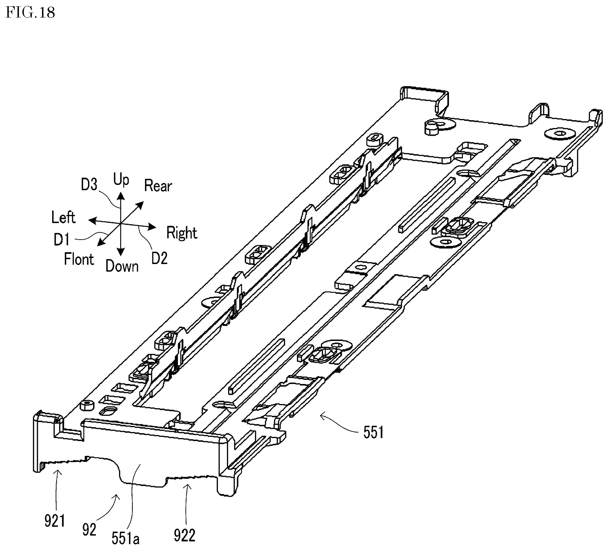

FIG. 18 is a perspective view showing the bottom surface support portion 551. As shown in FIG. 18, the height change portion 92 is provided at an end portion 551a (front end portion) on the front side of the bottom surface support portion 551. In other words, the height change portion 92 is provided at the end portion 55a on the front side of the fixing support body 55. Specifically, the height change portion 92 is provided at a lower portion of the end portion 551a of the bottom surface support portion 551.

The height change portion 92 has step portions 921 and 922 each including two or more steps 95 having different heights. The step portions 921 and 922 are provided at a lower end of the front end portion 551a of the bottom surface support portion 551, and are spaced apart from each other in the left-right direction D2 at the lower end.

Each of the step portions 921 and 922 has the same number of steps 95. In the present embodiment, the step portions 921 and 922 each have seven steps 95 having different heights. The size (size in the height direction) of the step difference of the each of the steps 95 with respect to the adjacent other step 95 is the same. The contact portions 91a and 91b of the adjustment member 91 come into contact with the respective steps 95. Specifically, the contact portions 91a and 91b of the adjustment member 91 each selectively come into contact with one of the steps 95 of the corresponding step portion 921, 922 in accordance with the attachment position of the adjustment member 91. Thus, the end portion on the front side of the bottom surface support portion 551 is supported by the contact portions 91a and 91b.

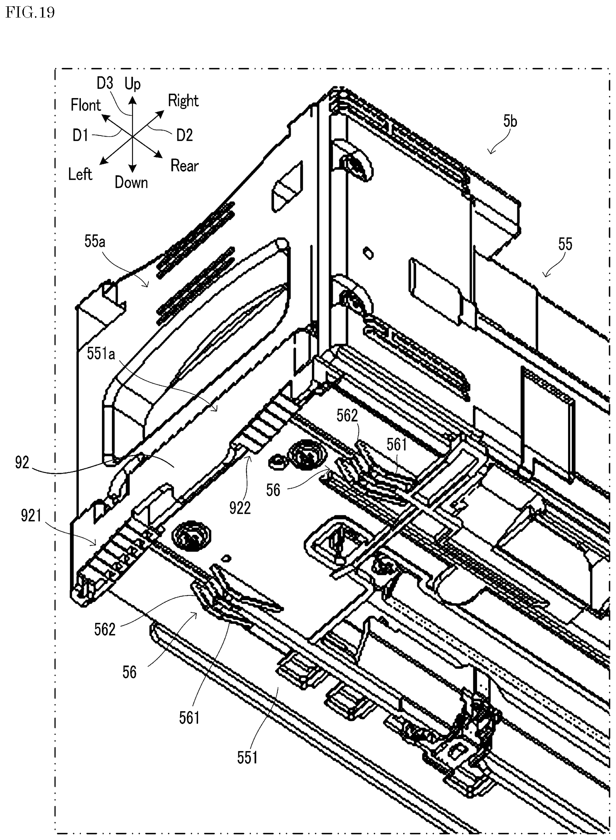

As shown in FIG. 18 and FIG. 19, the step portions 921 and 922 of the height change portion 92 protrude downward from the bottom surface of the bottom surface support portion 551 of the fixing support body 55. Therefore, in the process of inserting the fixing unit 5b from the opening portion 101 and moving it to the mounting position, the step portions 921 and 922 of the height change portion 92 come into contact with the contact portions 91a and 91b of the adjustment member 91, thereby preventing further insertion. In this case, the operator needs to lift the end portion 551a so that the step portions 921 and 922 do not come into contact with the contact portions 91a and 91b of the adjustment member 91, then push the fixing unit 5b rearward, and then lower the end portion 551a after the step portions 921 and 922 have moved above the contact portions 91a and 91b of the adjustment member 91. In addition, when the fixing unit 5b is pulled out, it is necessary for the operator to reduce an impact when the step portions 921 and 922 of the height change portion 92 are detached from the contact portions 91a and 91b of the adjustment member 91 and fall.

In the present embodiment, in order to eliminate such a troublesome insertion operation, as shown in FIG. 19, a pair of inclined cams 56 are provided on the front side of the bottom surface of the bottom surface support portion 551. Each of the inclined cams 56 protrudes downward from the bottom surface of the bottom surface support portion 551, and is formed in an inverted triangular shape when viewed from the side. The inclined cams 56 are spaced from each other in the left-right direction D2. Each inclined cam 56 has a first inclined portion 561 provided on the rear side and a second inclined portion 562 provided on the front side.

Since such inclined cams 56 are provided, the first inclined portion 561 of the inclined cam 56 comes into contact with the first beam 12a in the process of inserting the fixing unit 5b toward the mounting position, and the first inclined portion 561 lifts the front end portion 5b1 on the front side of the fixing unit 5b upward. Then, in the process of further inserting the fixing unit 5b rearward, the second inclined portion 562 comes into contact with the first beam 12a, and the front end portion 5b1 of the fixing unit 5b is lowered so that the step portions 921 and 922 are brought into contact with the contact portions 91a and 91b of the adjustment member 91.

It is noted that, when the fixing unit 5b is pulled out, the second inclined portion 562 of the inclined cam 56 comes into contact with the first beam 12a in the process of pulling out the fixing unit 5b, and the second inclined portion 562 lifts the front end portion 5b1 on the front side of the fixing unit 5b upward. In the process of pulling the fixing unit 5b further forward, the first inclined portion 561 comes into contact with the first beam 12a, and the front end portion 5b1 of the fixing unit 5b is lowered.

FIG. 20A and FIG. 20B are perspective views showing the adjustment member 91, where FIG. 20A is a perspective view of the adjustment member 91 as viewed from the front side, and FIG. 20B is a perspective view of the adjustment member 91 as viewed from the back side of the beam 12. As shown in FIG. 20A and FIG. 20B, the adjustment member 91 has two long holes 911 that are long in the left-right direction D2. A screw 912 (see FIG. 16) is inserted into each of the long holes 911, and the screw 912 is screwed into a female threaded portion formed in the first beam 12a, thereby securing the adjustment member 91 to the first beam 12a. In a state where the screw 912 is loosened, the adjustment member 91 is shifted in the left-right direction D2 along the long hole 911, and then the screw 912 is tightened, whereby the attachment position of the adjustment member 91 to the first beam 12a can be adjusted.

The contact portions 91a and 91b are provided on the upper surface of the adjustment member 91. The contact portion 91a is a left end portion of the adjustment member 91. The contact portion 91a is brought into contact with one of the steps 95 of the step portion 921. The contact portion 91b is a right end portion of the adjustment member 91. The contact portion 91b is brought into contact with one of the steps 95 of the step portion 922. In the present embodiment, the positional relationship between the contact portions 91a and 91b and the step portions 921 and 922 is determined such that the contact portions 91a and 91b come into contact with the steps 95 located at the same height when the attachment position of the adjustment member 91 is changed in the left-right direction D2.

The adjustment member 91 has a scale 914 indicating the height adjustment amount of the end portion 551a of the bottom surface support portion 551 of the fixing support body 55. The scale 914 is formed in a lower portion of the left long hole 911 of the adjustment member 91. The scale 914 is seven groove portions 915, the same number as the number of steps 95. The grooves 915 are formed at equal intervals in the left-right direction D2. A position adjustment groove portion 913 is formed in a lower portion of the right long hole 911 of the adjustment member 91. The position adjustment groove portion 913 includes seven V-shaped grooves formed at equal intervals in the left-right direction D2 similarly to the groove portions 915. When the adjustment member 91 is attached to the first beam 12a together with a base 93 to be described later, the position of the base 93 in the left-right direction D2 is fixed with respect to the first beam 12a, and an engagement projection 933 of the base 93 to be described later is inserted into one groove of the position adjustment groove portion 913. Thus, the attachment position of the adjustment member 91 is determined, and the height adjustment amount of the end portion 551a is changed depending on the insertion position of the engagement projection 933.

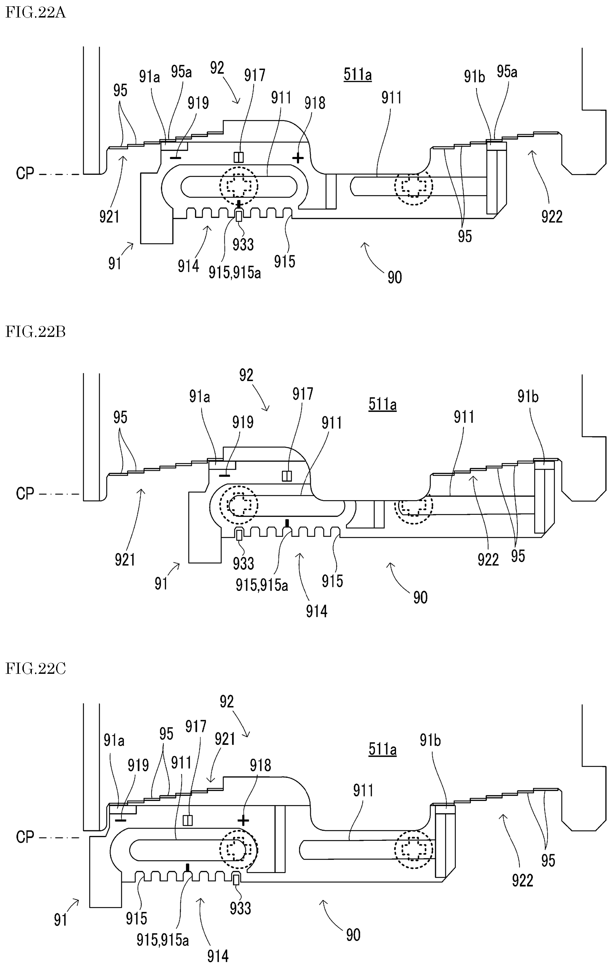

A mark 916 indicating the center position CP (see FIG. 22A) of the height adjustable range of the end portion 551a of the bottom surface support portion 551 is engraved on the upper side of a groove portion 915a located at the center among the plurality of groove portions 915. A mark 917 indicating the center position CP is provided at the front end of the upper surface of the adjustment member 91 at a position corresponding to the mark 916. The marks 916 and 917 are reference scales indicating the center position CP of the height adjustable range of the end portion 551a which is changed by the adjustment member 91 and the height change portion 92. The marks 916 and 917 may be formed by printing or by stickers, or may be ribs or grooves formed in the adjustment member 91 and extending in the up-down direction D3. In the present embodiment, as shown in FIG. 20A and FIG.20B, a vertical groove is shown as an example of the marks 916 and the mark 917.

In addition, a plus indication 918 (an example of the first indication of the present disclosure) indicating that the height position of the end portion 551a of the bottom surface support portion 551 has been adjusted upward from the center position CP, and a minus indication 919 (see FIG. 22A; an example of the second indication of the present disclosure) indicating that the height position of the end portion 551a has been adjusted downward from the center position CP are engraved on the front surface of the adjustment member 91. When the screw 912 is at a position on the plus indication 918 side, the position of the screw 912 indicates that the end portion 551a has been adjusted to a position higher than the center position CP. When the screw 912 is at a position on the minus indication 919 side, the position of the screw 912 indicates that the end portion 551a has been adjusted to a position lower than the center position CP. It is noted that the plus indication 918 and the minus indication 919 may be formed by printing or by stickers, or formed integrally with the adjustment member 91.

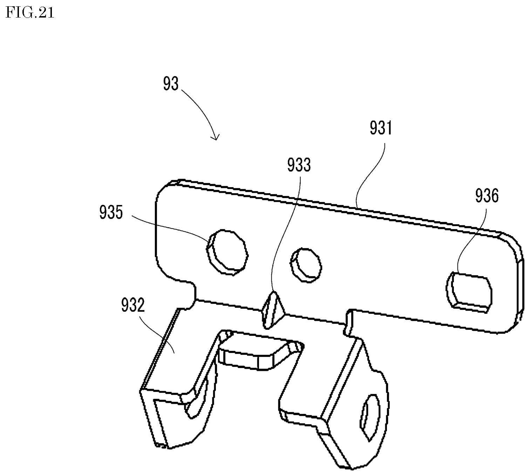

FIG. 21 is a perspective view showing the base 93 of the adjustment member 91. The base 93 is a member that is sandwiched and fixed between the rear surface of the adjustment member 91 and the first beam 12a, and is a mounting base for the adjustment member 91. The adjustment member 91 is attached to the first beam 12a together with the base 93 by the screw 912 inserted into the right long hole 911, with the base 93 interposed in a state where the mounting portion 931 of the base 93 is sandwiched between the back side of the right long hole 911 of the adjustment member 91 and the front-side side surface of the first beam 12a. The base 93 is attached by the screw 912 being inserted into a through hole 935 formed in its left end portion in the left-right direction D2. When the screw 912 of the adjustment member 91 is loosened to shift the adjustment member 91 in the left-right direction D2 for the adjustment of the height position, a state where the position in the left-right direction D2 is fixed to the first beam 12a is maintained. In addition, the rotation of the mounting portion 931 is restricted by the adjustment member 91.

The base 93 includes a laterally long plate-shaped mounting portion 931 fixed to the first beam 12a, and a protruding portion 932 protruding forward and diagonally downward from the lower end of the mounting portion 931. A mountain-rib-shaped engagement projection 933 is formed between the mounting portion 931 and the protruding portion 932. When the adjustment member 91 is fixed to the first beam 12a via the base 93, the engagement projection 933 is inserted into the groove portion 915.

Since the height adjustment mechanism 90 is configured as described above, as shown in FIG. 22A, when aligning the height position of the front end portion 5b1 of the fixing unit 5b with the center position CP, the operator loosens the adjustment member 91 in a state where the fixing unit 5b is once removed, and moves the adjustment member 91 to a position where the engagement projection 933 is inserted into the groove portion 915a. Then, the adjustment member 91 is fixed to the first beam 12a in a state where the engagement projection 933 is inserted into the groove portion 915a. Thereafter, when the fixing unit 5b is inserted into the main body frame 1x from the opening portion 101 to the mounting position, the contact portions 91a and 91b come into contact with the central step 95a. Thus, the height position of the front end portion 5b1 of the fixing unit 5b can be aligned with the center position CP.

As shown in FIG. 22B, when aligning the height position of the front end portion 5b1 of the fixing unit 5b with a position lower than the center position CP, the operator loosens the adjustment member 91 in a state where the fixing unit 5b is removed, and moves the adjustment member 91 to a position where the engagement projection 933 is inserted into the groove portion 915 located on the left side (minus indication 919 side) of the groove portion 915a. The insertion position of the engagement projection 933 in the groove portion 915 is determined by the operator in accordance with the amount of lowering adjustment required. Then, the adjustment member 91 is fixed to the first beam 12a with the engagement projection 933 inserted into the groove portion 915. Thereafter, when the fixing unit 5b is inserted into the main body frame 1x from the opening portion 101 to the mounting position, the contact portions 91a and 91b come into contact with a step 95 located to the right of the central step 95a. It is noted that FIG. 22B shows a state where the contact portions 91a and 91b are in contact with the rightmost step 95. Thus, the height position of the front end portion 5b1 of the fixing unit 5b can be aligned with a position lower than the center position CP.

In addition, as shown in FIG. 22C, when aligning the height position of the front end portion 5b1 of the fixing unit 5b with a position higher than the center position CP, the operator loosens the adjustment member 91 in a state where the fixing unit 5b is removed, and moves the adjustment member 91 to a position where the engagement projection 933 is inserted into the groove portion 915 located on the right side (plus indication 918 side) of the groove portion 915a. The insertion position of the engagement projection 933 in the groove portion 915 is determined by the operator in accordance with the amount of raising adjustment required. Then, the adjustment member 91 is fixed to the first beam 12a with the engagement projection 933 inserted into the groove portion 915. Thereafter, when the fixing unit 5b is inserted into the main body frame 1x from the opening portion 101 to the mounting position, the contact portions 91a and 91b come into contact with a step 95 located to the left of the central step 95a. It is noted that FIG. 22C shows a state where the contact portions 91a and 91b are in contact with the leftmost step 95. Thus, the height position of the front end portion 5b1 of the fixing unit 5b can be aligned with a position higher than the center position CP.

With such a height adjustment mechanism 90, it is possible to realize a mechanism for adjusting the attachment position of the fixing unit 5b in the height direction without expanding the main body frame 1x or making the structure complicated. That is, according to the present embodiment, it is possible to realize the image forming apparatus 10 including the height adjustment mechanism 90 capable of adjusting the attachment position of the fixing unit 5b without causing the main body frame 1x to become large or complicated. In addition, the operator can easily adjust the attachment position in the height direction of the front end portion 5b1 of the fixing unit 5b only by adjusting the adjustment member 91.

In addition, since the adjustment member 91 of the height adjustment mechanism 90 is provided on the front-side side surface 12a1 of the first beam 12a and the height change portion 92 is provided at the lower end of the end portion 551a on the front side of the bottom surface support portion 551, the operator can easily grasp the positions of the adjustment member 91 of the height adjustment mechanism 90 and the height change portion 92 when adjusting the height of the attachment position of the fixing unit 5b.

In addition, since the above-described scale 914, marks 916 and 917, plus indication 918, minus indication 919, and the like are engraved, the operator can easily grasp the adjustment position and the adjustment direction (plus side, minus side).

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (10) comprising:
a main body frame (1x); and
a fixing unit (5b) supported by the main body frame (1x), wherein
the main body frame (1x) includes:
two struts (11, 11) extending in a vertical direction and spaced apart from each other in a first direction orthogonal to the vertical direction; and
two beams (12, 12) extending in a horizontal direction, spaced apart from each other in the first direction, and coupled to the two struts, respectively,
the fixing unit (5b) includes:
a fixing support body (55) with a bottom surface side placed on the two beams, in a state of being bridged over the two beams,
a first beam (12a) on a first side of the first direction among the two beams includes an adjustment member (91) attached to the first beam such that an attachment position in a same direction as an extending direction of the first beam is changeable, and
the fixing support body (55) includes a height change portion (92) configured to come into contact with a contact portion provided in the adjustment member (91) and change a height of a first end portion on the first side of the fixing support body (55) with respect to the first beam in accordance with the attachment position of the adjustment member.

2. The image forming apparatus (10) according to claim 1, wherein the adjustment member (91) is attached to a first side surface on the first side of the first beam.

3. The image forming apparatus (10) according to claim 1 or 2, wherein
the height change portion (92) includes a step portion (921, 922) including two or more steps having different heights, and
the contact portion of the adjustment member (91) selectively comes into contact with one of the steps of the step portion (921, 922) in accordance with the attachment position of the adjustment member (91).

4. The image forming apparatus (10) according to any one of claims 1 to 3, wherein
the main body frame (1x) supports the fixing unit (5b) at a predetermined mounting position on the main body frame (1x) so that the fixing unit (5b) can be pulled out from the main body frame (1x) toward the first side, and
the height change portion (92) is provided at the first end portion of the fixing support body (55).

5. The image forming apparatus (10) according to claim 3, wherein
the step portion (921, 922) of the height change portion (92) protrudes downward from a bottom surface of the fixing support body (55), and
the fixing support body (55) includes a first inclined portion (561) configured to come into contact with the first beam and lift the first end portion of the fixing unit (5b) upward in a process of inserting the fixing unit (5b) toward the predetermined mounting position, and a second inclined portion (562) configured to lower the first end portion and bring the step portion (921, 922) into contact with the contact portion in a process of further inserting the fixing unit (5b).

6. The image forming apparatus (10) according to claim 4 or 5, further comprising:
an exterior member (100) covering a portion on the first side of the main body frame (1x), wherein
the exterior member (100) includes:
an opening portion (101) configured to allow the fixing unit (5b) pulled out from the main body frame (1x) to pass therethrough; and
a cover portion (102) rotatable between a closed position to close the opening portion (101) and an open position to open the opening portion (101), and
the adjustment member (91) is covered and hidden by the cover portion (102) in a state where the cover portion (102) is in the closed position.

7. The image forming apparatus (10) according to claim 2, wherein the two beams are a quadrangular prism-shaped pipe frame including the first side surface.

8. The image forming apparatus (10) according to any one of claims 1 to 7, wherein the adjustment member (91) includes a scale (914) indicating a height adjustment amount of the first end portion of the fixing support body (55).

9. The image forming apparatus (10) according to claim 8, wherein the scale (914) includes a reference scale (916, 917) indicating a center position of a height adjustable range of the first end portion changed by the adjustment member (91) and the height change portion (92).

10. The image forming apparatus (10) according to claim 9, wherein the adjustment member (91) includes both or either of a first indication (918) indicating that a height position of the first end portion has been adjusted upward from the center position and a second indication (919) indicating that the height position of the first end portion has been adjusted downward from the center position.

11. The image forming apparatus (10) according to any one of claims 1 to 10, further comprising:
a heating unit (5a) disposed beside the fixing unit (5b) and supported by the main body frame (1x), wherein
the fixing unit (5b) is disposed between the heating unit (5a) and the two struts,
the heating unit (5a) includes a heating support body (54) with a bottom surface side placed on the two beams, in a state of being bridged over the two beams,
the image forming apparatus (10) further includes:
a heating unit urging member (60) configured to urge the heating support body (54) toward the fixing support body (55) with elastic force so as to bring the heating support body (54) into contact with the fixing support body (55) and bring the fixing support body (55) into contact with the two struts;
an operation portion (102) movable between a first position and a second position by being operated; and
an interlocking mechanism (6) configured to move the heating unit (5a) along the extending direction in conjunction with movement of the operation portion (102), the extending direction being a same direction as a direction in which the heating unit (5a) and the fixing unit (5b) are arranged,
the interlocking mechanism (6) moves the heating support body (54) from a reference position where the heating support body (54) is in contact with the fixing support body (55) to a retracted position where the heating support body (54) is separated from the fixing support body (55) when the operation portion moves from the first position to the second position,
the interlocking mechanism (6) moves the heating support body (54) from the retracted position to the reference position when the operation portion (102) moves from the second position to the first position, and
the fixing unit (5b) is allowed to be pulled out from the main body frame (1x) toward the first side when the heating support body (54) is at the retracted position.

12. The image forming apparatus (10) according to claim 11, wherein
one of the fixing support body (55) and the heating support body (54) includes a concave portion (542) which opens laterally,
another one of the fixing support body (55) and the heating support body (54) includes a convex protruding portion (553) loosely fitted into the concave portion (542) when the heating support body (54) moves from the retracted position to the reference position, and
relative movement of the fixing support body (55) and the heating support body (54) in the vertical direction is restricted by the protruding portion (553) being fitted into the concave portion (542).
